**Europäisches Patentamt**

**European Patent Office**

**Office européen des brevets**

(11) Veröffentlichungsnummer: **0 113 475**
**A2**

(12) # EUROPÄISCHE PATENTANMELDUNG

(21) Anmeldenummer: **83112968.9**

(51) Int. Cl.³: **G 10 K 11/16**

(22) Anmeldetag: **22.12.83**

(30) Priorität: **07.01.83 DE 3300298**

(43) Veröffentlichungstag der Anmeldung:
**18.07.84 Patentblatt 84/29**

(84) Benannte Vertragsstaaten:
**DE FR GB IT SE**

(71) Anmelder: **CHEMIE-WERK WEINSHEIM GMBH**
**Weinsheimer Strasse 129**
**D-6520 Worms(DE)**

(72) Erfinder: **Henschke, Siegfried**
**Kurt-Schumacher-Strasse 172**
**D-5042 Erftstadt(DE)**

(72) Erfinder: **Plate, Rudolf, Dipl.Kfm.**
**Am Glaskopf 7**
**D-6520 Worms(DE)**

(72) Erfinder: **Probst, Werner, Dipl.Kfm.**
**Braeunigstrasse 8**
**D-6520 Worms(DE)**

(74) Vertreter: **Leineweber, Jürgen, Dipl.-Phys.**
**Bonner Strasse 504 Postfach 51 07 60**
**D-5000 Köln 51(DE)**

(54) **Plattenförmiges Teil mit körperschalldämpfender und versteifender Wirkung.**

(57) Für die Aufbringung auf Blechwandungen wird ein plattenförmiges Teil vorgeschlagen, das zur Erzielung sowohl einer körperschalldämpfenden als auch einer versteifenden Wirkung aus einer Bitumenplatte (1) besteht, die entweder mit Sicken oder eine Wellform prägenden Stäbchen (3) oder mit einer weniger als 1 mm starken Schicht (7) aus mit wärmehärtendem Harz getränkten Glasfasern bzw. Glasvlies ausgerüstet ist.

FIG.1

**EP 0 113 475 A2**

CWW

"PLATTENFÖRMIGES TEIL MIT KÖRPERSCHALLDÄMPFENDER UND VERSTEIFENDER
WIRKUNG"

----------------------------------------------------------------

Die Erfindung bezieht sich auf ein plattenförmiges Teil mit
körperschalldämpfender und versteifender Wirkung.

Es ist bekannt, auf vibrierende oder dröhnende Blechwandungen
plattenförmige Teile aufzubringen, die vorzugsweise aus gefülltem
Bitumen bestehen und eine Körperschalldämpfung bewirken. Weiterhin
ist es bekannt, Blechwandungen mit Aussteifungssystemen zu versehen, wodurch der Vorteil der Verwendungsmöglichkeit dünnerer
Bleche, also der Vorteil der Ersparnis hochwertiger Materialien
erreicht werden soll. Schließlich sind plattenförmige Elemente
bekannt geworden, die sowohl körperschalldämpfende als auch versteifende Eigenschaften haben.

Die Vielzahl der in der letzten Zeit bekannt gewordenen Vorschläge
zeigt, daß eine den optimalen Kompromiß zwischen den verschiedenen
Forderungen - gute Entdröhnungseigenschaften, gute Versteifungseigenschaften, angemessene Ersparnis von hochwertigen Materialien,
kostengünstige Herstellung, einfache Verarbeitung - darstellende
Platte noch nicht gefunden wurde. Viele Systeme (z.B. eigensteife
Systeme oder Laminatsysteme) haben gute Versteifungseigenschaften,
sind aber in der Herstellung und Verarbeitung kostspielig. Andere,
z.B. Zweikomponentensysteme, haben zwar ebenfalls gute Versteifungseigenschaften, sind aber hinsichtlich ihrer Entdröhnungseigenschaften
schlecht. Schließlich haben die seit langem bekannten einfachen
Bitumen-Schichten zwar gute Entdröhnungseigenschaften; ihre versteifende Wirkung ist jedoch minimal.

**CWW**

Der vorliegenden Erfindung liegt die Aufgabe zugrunde, eine Bitumenplatte mit Versteifungseigenschaften zu versehen, deren Wirkung gerade noch ausreicht, um bei den zu entdröhnenden und zu versteifenden Blechwandungen auf eine Materialersparnis nicht verzichten zu müssen. Dabei soll die Herstellung der erfindungsgemäßen Platte kostengünstig bleiben, und die Verarbeitung dieser Platte durch die vorgesehenen, eine Versteifung bewirkenden Maßnahmen nicht wesentlich behindert werden.

Erfindungsgemäß wird diese Aufgabe durch eine aus gefülltem Bitumen bestehenden Platte gelöst, die mit parallel angeordneten, Sicken prägenden Stäbchen oder Röhrchen ausgerüstet ist. Das Material und der Querschnitt der Stäbchen oder Röhrchen soll so gewählt sein, daß während der Herstellung und Verarbeitung der Platte die Bildung und Aufrechterhaltung von Sicken sichergestellt ist. Die von den Stäbchen oder Röhrchen selbst ausgehende Versteifungswirkung soll von untergeordneter Bedeutung sein.

Eine andere Möglichkeit, die erfindungsgemäße Aufgabe zu lösen, besteht darin, die aus Bitumen bestehende Platte mit einer sehr dünnen (weniger als 1 mm starken) Schicht aus mit wärmehärtendem Harz getränkten Glasfasern bzw. Glasvlies zu versehen. Diese Lösung ist dann vorteilhaft, wenn eine Platte Entdröhnungs- und Versteifungseigenschaften haben soll, ihre Stärke aber sehr klein bleiben soll.

Beide vorgeschlagenen Plattenarten haben gute Entdröhnungseigenschaften und darüber hinaus ein ausreichendes Maß an versteifender Wirkung. Ihre Herstellung ist einfach. So erfolgt z.B. das Ausrüsten der Platten mit den Röhrchen oder Stäbchen während des Herstellungsvorganges in der Weise, daß in einem ersten Schritt Papierbahnen, Pappenbahnen oder Bitumenbahnen mit Stäbchen bzw. Röhrchen belegt und in der gewünschten Lage fixiert werden.

auf
Im zweiten Schritt werden die mit Stäbchen und Röhrchen ausgerüsteten Bahnen Bitumenbahnen kaschiert, wobei Stäbchen und Röhrchen die Zwischenschicht bilden.

CWW

Die anschließende Wärmebehandlung läßt die oben liegende, zuletzt zukaschierte Bitumenbahn wellenförmig aufschmelzen.

Bei der mit einer Versteifungsschicht versehenen Platte erfolgt das Aufbringen der Glasfasern bzw. des Glasvlieses vor dem letzten Walzenvorgang, sodaß die, z.B. aufgestreuten, Glasfasern bzw. das Glasvlies auf der Oberfläche der Bitumenschicht haften. Gleichzeitig oder anschließend wird die ebenfalls sehr dünne Schicht aus wärmehärtendem Harz aufgebracht. Eine in dieser Weise hergestellte Platte unterscheidet sich hinsichtlich ihrer Verarbeitungseigenschaften nicht von einer herkömmlichen, allein aus gefülltem Bitumen bestehenden Platte ohne versteifende Wirkung. Sie erhält ihre Versteifungseigenschaft erst nach einem Wärmebehandlungsschritt, bei Autoblechteilen z.B. während einer Lacktrockungsphase.

Weitere Vorteile und Einzelheiten der Erfindung sollen anhand von in den Figuren dargestellten Ausführungsbeispielen erläutert werden.

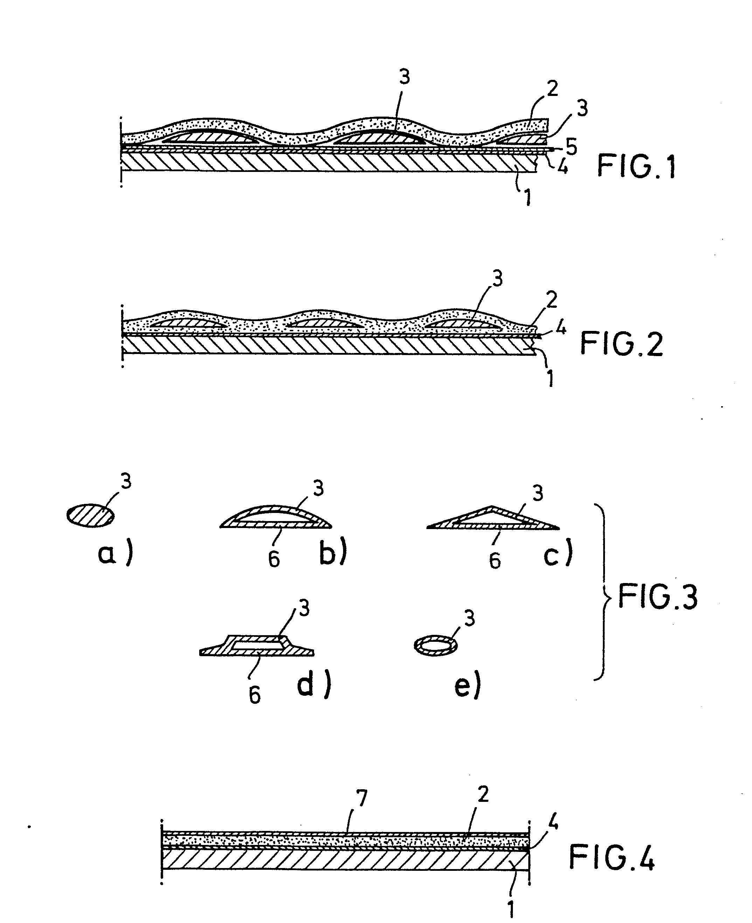

In den Figuren 1 und 2 sind auf ein zu entdröhnendes und zu versteifendes Blech 1 aufgebrachte Bitumenschichten 2 dargestellt, welche durch Stäbchen 3 eine gewellte Form haben. Die Stäbchen 3 haben im Querschnitt die Form von Kreisabschnitten und liegen parallel zueinander, sodaß zu einer den Stäbchen parallelen Achse ein Aufrollen der Platte oder Bahn möglich ist. Mittels einer Kleberschicht 4 haften die aus Stäbchen 3 und Bitumenschicht 2 bestehenden Systeme auf dem Blech 1. Die Bitumenschicht 2 sorgt für eine Entdröhnung des Blechs 1. Infolge der durch die Stäbchen 3 gewährleisteten Wellform hat das System darüber hinaus ebenfalls eine das Blech 1 versteifende Wirkung. Die Stäbchen (oder auch die Röhrchen nach Figur 3) bestehen aus relativ flexiblem Material, z.B. Nylon oder Polyphenyloxid, sodaß sie die Verarbeitungseigenschaften der Bitumenbahn 3 nicht wesentlich beeinträchtigen.

Beim Gegenstand der Figur 1 liegen die Stäbchen 3 zwischen einer Schicht 5 aus Papier oder Pappe und der Bitumenschicht 2. Mittels dieser Papierschicht 4 werden sie in ihrer Lage gehalten und gewährleisten auch während der Verarbeitung die Wellform der Bitumenschicht 2.

Beim Gegenstand nach Figur 2 sind die Stäbchen 3 in die Bitumenschicht 2 eingelassen. Das kann in einfacher Weise während des Herstellprozesses geschehen.

Die Figuren 3 a bis 3 e zeigen verschiedene Querschnittformen für Stäbchen oder Röhrchen 3, mit denen die Bitumenschicht 2 ausgerüstet werden kann. Die Ausführungsformen nach 3 a und 3 e haben ovalen Querschnitt, ausgebildet als Stäbchen und als Röhrchen. Die Ausführungsformen nach den Figuren 3 b bis 3 d haben eine ebene Begrenzungsfläche 6, die - bei auf ein Blechteil 1 aufgebrachter Schicht - dem Blechteil zugewandt ist. Der andere Teil der Begrenzungsfläche ist gewölbt oder spitz zulaufend gestaltet, um bei der Bitumenschicht Sicken bzw. eine Wellform sicherzustellen.

Figur 4 zeigt ein Ausführungsbeispiel für eine weitere Möglichkeit, einer Bitumenschicht 2 ein gewisses Maß an versteifender Wirkung zu geben. Dazu ist die Bitumenschicht 2 mit einer sehr dünnen, z.B. 0,2. mm dicken Schicht 7, bestehend aus Glasfasern bzw. Glasvlies und einem wärmehärtenden Harz versehen. Das Aufbringen dieser Schicht erfolgt z.B. durch Bestreuen der Bitumenbahn mit Glasfasern bzw. Aufkaschieren vin Glasvlies vor dem letzten Walzschnitt, sodaß das Fasermaterial bzw. Glasvlies auf dem Bitumen haftet. Danach - oder auch nach dem Aufkleben der Bahn auf das Blechteil - erfolgt die Aufbringung des wärmehärtenden Harzes z.B. durch Bestreichen, sodaß das gesamte System während eines sich anschließenden Wärmebehandlungsschnittes seine versteifende Wirkung erhält.

Ansprüche

1) Plattenförmiges Teil mit körperschalldämpfender und versteifender Wirkung, dadurch gekennzeichnet, daß eine aus Bitumen bestehende Platte (2) mit parallel zueinander angeordneten Sicken oder eine Wellform prägenden Stäbchen oder Röhrchen (3) ausgerüstet ist.

2) Plattenförmiges Teil nach Anspruch 1, dadurch gekennzeichnet, daß die Stäbchen oder Röhrchen (3) im Querschnitt oval gestaltet sind.

3) Plattenförmiges Teil nach Anspruch 1, dadurch gekennzeichnet, daß die Stäbchen oder Röhrchen (3) eine ebene Begrenzungsfläche (6) aufweisen.

4) Plattenförmiges Teil nach Anspruch 1, 2 oder 3, dadurch gekennzeichnet, daß die Stäbchen oder Röhrchen (3) aus relativ flexiblem Material, z.B. Nylon oder Polyphenyloxid, bestehen.

5) Plattenförmiges Teil mit körperschalldämpfender und versteifender Wirkung, dadurch gekennzeichnet, daß eine aus Bitumen bestehende Platte (2) mit einer weniger als 1 mm starken Schicht (7) aus mit wärmehärtendem Harz getränkten Glasfasern bzw. Glasvlies ausgerüstet ist.

FIG.1

FIG.2

FIG.3

a) b) c) d) e)

FIG.4